# EUROPÄISCHE PATENTSCHRIFT

(11) **EP 1 336 683 B1**
(45) Veröffentlichungstag und Bekanntmachung des Hinweises auf die Patenterteilung: **11.06.2008**
(21) Anmeldenummer: 03002101.8
(22) Anmeldetag: 30.01.2003
(51) Int. Cl.: D06N 3/12, D06M 15/643, D06M 15/564, C08G 77/458, C08G 18/61

(54) **Organopolysiloxan/Polyharnstoff/Polyurethan-Blockcopolymer aufweisende textile Gebilde**
Textile material coated or finished with organopolysiloxan/Polyurea/Polyurethan-Blockcopolymer
Matériau textile traité ou enduit de copolymères séquences Organopolysiloxane/Polyurée/Polyuréthane

(30) Priorität: 14.02.2002 DE 10206123
(43) Veröffentlichungstag der Anmeldung: 20.08.2003
(73) Patentinhaber: Wacker Chemie AG, 81737 München (DE)
(72) Erfinder: Hohberg, Thomas, Dr., 33699 Bielefeld (DE); Schäfer, Oliver, Dr., 81377 München (DE); Müller, Johann, 94357 Konzell (DE); Moens, Philippe, 9860 Gijzenzele (BE); Lehotkay, Thomas, Dr., 84453 Mühldorf (DE)
(74) Vertreter: Fritz, Helmut

(56) Entgegenhaltungen:
- EP-A- 1 132 378
- WO-A-85/05322
- WO-A-85/05373
- US-A- 3 705 823
- US-A- 4 098 742

## Beschreibung

Die Erfindung betrifft Organopolysiloxan/Polyharnstoff/-Polyurethan-Blockcopolymer aufweisende textile Gebilde und die Verwendung des Blockcopolymeren als Beschichtungsmaterial oder Ausrüstungsmaterial für Fasern und textile Flächengebilde.

Polyurethane werden unter anderem als Beschichtungsmittel für textile Gebilde eingesetzt. Hierbei sind unter anderem die Schutzwirkung und die wasserabweisende Wirkung der PU-Beschichtung von Interesse. Polyurethane zeichnen sich dabei durch ihre mechanische Festigkeit, Elastizität, eine sehr gute Haftung und Abriebfestigkeit aus. Nachteilig sind jedoch die mangelnde Wasserdampfdurchlässigkeit, schlechtes Tieftemperaturverhalten, z.T. mangelnde UV-Stabilitäten, mangelnde Hydrolysestabilitäten und hohe Schmelzviskositäten. Siliconelastomere dagegen besitzen eine ausgezeichnete Temperatur, UV-, und Bewitterungsstabilität, hervorragende Wasserdampfdurchlässigkeiten und niedrige Schmelzviskositäten. Dabei neigen sie nicht zur Versprödung. Weiterhin besitzen sie spezielle wasserabweisende und antihaftende Oberflächeneigenschaften. Auch zeigen Beschichtungen aus vernetzten Siliconelastomeren gegenüber z.B. Polyurethan-Beschichtungen einen deutlich angenehmeren "Griff". Leider sind die mechanischen Eigenschaften und die Abriebfestigkeiten von Beschichtungen von Siliconelastomeren auf Textilien für einige Einsatzbereiche wie z.B. hoch beanspruchte Sportbekleidung nicht ausreichend.

In der WO 00/64971 werden Siloxan-Urethan/Harnstoffpolymere unter anderem zur Verwendung als Textil beansprucht. Die dort beschriebenen Polymere weisen als gemeinsames Merkmal sehr hohe Elastizitätsmoduli (25-100 MPa) und Reißfestigkeiten (16-32 MPa) auf und sind daher als Thermoplasten (schlagzäh modifiziert) einzuordnen. Daher ist deren Verwendung als Textil oder Schuhsohle, künstliches Leder, Membranen usw. vorgeschlagen.

Grundsätzlich sind die unterschiedlichen Eigenschaftsprofile von Polyurethanen und Silikonen sehr unterschiedlich und ergänzen sich prinzipiell in idealer Weise. Erfahrungsgemäß lassen sich viele gewünschte Eigenschaftsprofile durch Mischungen aus Silikon und Polyurethanen jedoch nicht erzeugen. Nicht zuletzt aufgrund der chemisch physikalischen Unverträglichkeit (Mischbarkeit, Haftung, Reaktivität, ...) der Komponenten führt der Versuch, die positiven Effekte der Einzelkomponenten durch Mischung der Komponenten zu kombinieren, zu neuen unerwünschten Effekten, während die ursprünglichen negativen Eigenschaften der Einzelkomponenten in der Regel erhalten bleiben.

Die Kombination von Urethan- und Silicon-Polymeren führt zu Siloxan-Urethan-Blockcopolymeren mit guten mechanischen Eigenschaften, die sich durch eine gegenüber den Silicon-Homopolymeren verbesserte Mechanik auszeichnen, jedoch weiterhin die positiven Eigenschaften der Silicone besitzen. Die Kombination der Vorteile beider Systeme führt so zu Verbindungen mit niedrigen Glastemperaturen, geringen Oberflächenenergien, verbesserten thermischen und photochemischen Stabilitäten und geringerer Hydrolyseneigung. Solche Materialien sind beispielsweise in EP 250248 A1, und EP 636361 A1 beschrieben.

Gegenstand der Erfindung sind textile Gebilde, die Fasern und Organopolysiloxan/Polyharnstoff/Polyurethan-Blockcopolymer (A) der allgemeinen Formel (1) 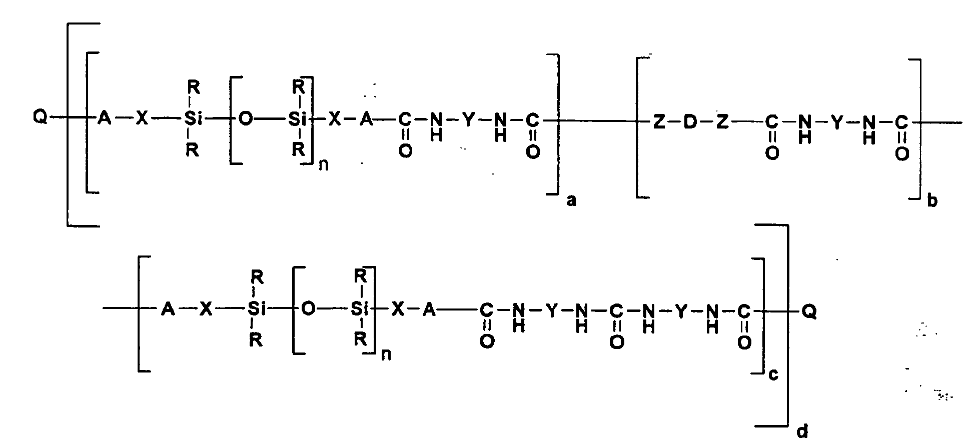 als Beschichtungsmaterial oder Ausrüstungsmaterial für die Fasern umfassen, wobei
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können,
- **A**: ein Sauerstoffatom oder eine Aminogruppe -NR'-,
- **Z**: ein Sauerstoffatom oder eine Aminogruppe -NR'-,
- **R'**: Wasserstoff oder einen Alkylrest mit 1 bis 10 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **D**: einen Alkylenrest mit 1 bis 1500 Kohlenstoffatomen, in dem einander nicht benachbarte Methyleneinheiten durch Gruppen -O-, -COO-, -OCO-, oder -OCOO-, ersetzt sein können, der durch Fluor, Chlor, C₁-C₆-Alkyl- oder C₁-C₆-Alkylester, der durch Aminogruppen, gegebenenfalls mit Säure umgesetzt, Carbonsäure- oder Sulfonsäure-Gruppen gegebenenfalls mit Base umgesetzt, substituiert sein kann,
- **Q**: eine reaktive oder nicht reaktive Endgruppe, welche kovalent an das Polymer gebunden ist,
- **n**: eine Zahl von 1 bis 4000,
- **a**: eine Zahl von mindestens 1,
- **b**: eine Zahl von 0 bis 40,
- **c**: eine Zahl von 0 bis 30 und
- **d**: eine Zahl größer 0 bedeuten.

Blockcopolymer (A) ist ein thermoplastisches Elastomer mit Reißfestigkeiten von vorzugsweise höchstens 15 MPa, insbesondere höchstens 10 MPa. Blockcopolymer (A) zeichnet sich aus durch einen bei den Siliconen bekannten angenehmen "Griff". Blockcopolymer (A) wird in den textilen Gebilden nicht als Strukturmaterial (z.B. als Textil oder Garn aus diesem Material), sondern als Beschichtungsmaterial oder Ausrüstung für Fasern, textile Materialien und Flächengebilde verwendet. Hierbei werden die mechanischen Beanspruchungen vom Fasermaterial aufgefangen und die Beschichtung oder Ausrüstung verleiht dem Textil zusätzliche gewünschte Eigenschaften.

Es wurde gefunden, daß die Blockcopolymer (A) aufweisenden textilen Gebilde Eigenschaften aufweisen, die mit bisherigen Verfahren z.B. durch Anwendung einzelner Komponenten sowie Abmischung verschiedener Einzelkomponenten und deren Auftrag auf Fasern nicht erreicht werden können.
Durch Applikation von Blockcopolymer (A) z.B. aus Schmelze, Lösung oder Dispersion können einzelne und insbesondere neuartige Kombinationen der im folgenden genannten Eigenschaften und Effekte erreicht werden, wobei diese waschpermanent sind:
Verbesserung der Verarbeitungsfähigkeit (kein Ausfransen), Optimierung des optischen Eindruckes der Oberfläche (z.B. Glanz), Verbesserung des Oberflächengriffes, hohe Wasserdichtheit (> 100 mbar), gute Wasserabweisung, Verschweißbarkeit, Erhöhung der Reiß- und Weiterreißfestigkeit des textilen Gebildes, Erzielung von Atmungsaktivität bei gleichzeitiger Wasserdichtheit und wahlweise hydrophiler oder hydrophober Oberfläche, Waschpermanenz, Schmutzabweisung, Bedruck-, Lackier- und Beschriftbarkeit, insbesondere mit Standardfarben, Lichtstabilität, verbesserte Griffeigenschaften, erhöhte Weichheit, erhöhte Elastizität, Kälteflexibilität, verbesserter Fall, verbesserte Knittererholung, leichteres Bügeln, Verlängerung des durch Bügeln erreichten Glätteeffekts, Erhöhung der Oberflächenglätte und dadurch Verringerung von Reibungskräften bei der Verarbeitung, z.B. Verbesserung der Vernähbarkeit, Schutz der Fasern vor Licht, Chemikalien, Temperatur und Wettereinflüssen, Erhöhung des Lichtschutzfaktors des textilen Gebildes, Verbesserung der Nahtschiebefestigkeit, Verbesserung der Pilling Eigenschaften, Verringerung der Schrumpfneigung, Verringerung der Filzneigung,
Verbesserung der Hydrophilie, Farbvertiefung auf gefärbten Fasern, Ermöglichung der Herstellung leitfähiger Oberflächen, einer antistatische Wirkung, temperaturverformbaren textilen Gebilden.
Durch Kombination mit FC-Hydrophobausrüstung können die vorstehenden Wirkungen, insbesondere die Weichheit verbessert werden. Gleiche Wirkungen können bei verringerter FC-Einsatzmenge erreicht werden.

Vorzugsweise bedeutet **R** einen einwertigen Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 1 bis 10 Kohlenstoffatomen. Vorzugsweise ist der Alkylen-Rest **X** nicht unterbrochen.

Vorzugsweise bedeutet **A** eine NH-Gruppe oder ein Sauerstoffatom.

Vorzugsweise bedeutet **Z** ein Sauerstoffatom oder eine NH-Gruppe.

Vorzugsweise bedeutet **Y** einen Kohlenwasserstoffrest mit 3 bis 13 Kohlenstoffatomen, der vorzugsweise nicht substituiert ist. Vorzugsweise bedeutet **Y** einen Aralkylen-, linearen oder cyclischen Alkylen-Rest.

Vorzugsweise bedeutet **D** einen Alkylenrest mit mindestens 2, insbesondere mindestens 4 Kohlenstoffatomen und höchstens 12 Kohlenstoffatomen.
Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen.
Vorzugsweise ist der Rest **D** nicht substituiert.

Vorzugsweise bedeutet **Q** eine Alkoxysilyl-Gruppe, insbesondere C₁-C₄-Alkoxysilyl-Gruppe, z.B Methoxy- oder Ethoxysilyl-Gruppe, Aminoalkylgruppe, eine Hydroxygruppe oder eine NCO-Gruppe, die über kovalente Bindungen mit dem Polymer verbunden sind.

**n** bedeutet vorzugsweise eine Zahl von mindestens 3, insbesondere mindestens 25 und vorzugsweise höchstens 800, insbesondere höchstens 400, besonders bevorzugt höchstens 250.

Vorzugsweise bedeutet **a** eine Zahl von höchstens 50.

Wenn **b** ungleich 0, bedeutet **b** vorzugsweise'eine Zahl von höchstens 50, insbesondere höchstens 25.

**c** bedeutet vorzugsweise eine Zahl von höchstens 10, insbesondere höchstens 5.

Das Blockcopolymer (A) der allgemeinen Formel (1) zeigt hohe Molekulargewichte und gute mechanische Eigenschaften bei guten Verarbeitungseigenschaften.

Vor allem durch den Einsatz von Kettenverlängerern wie Dihydroxyverbindungen oder Wasser zusätzlich zu den Harnstoffgruppen kann eine deutliche Verbesserung der mechanischen Eigenschaften erreicht werden.

Die Herstellung des Organopolysiloxan/Polyharnstoff/Polyurethan -Blockcopolymeren (A) der allgemeinen Formel (1) kann erfolgen durch Umsetzung von
a )Aminoalkylpolydiorganosiloxan der allgemeinen Formel (4)

   H₂N-X-[SiR₂O]ₙSiR₂-X-NH₂

   mit
b) Diisocyanaten der allgemeinen Formel (5)

   OCN-Y-NCO

   und gegebenenfalls
c) Bishydroxyalkyl-terminierten Siloxanen der allgemeinen Formel (6)

   HO-X-[SiR₂O]ₙSiR₂-X-OH

   und Verbindungen, die ausgewählt werden aus
d) Kettenverlängerern,
e) Polyetherpolyolen, Polyesterpolyolen, Polyether-Polyesterpolyolen der allgemeinen Formel (7)

   HO-[(R'')ₑ-(O_{g}(CO))_{f}-O]ₕ -H,

   wobei
   - **R''**: einen zweiwertigen, gegebenenfalls durch Fluor oder Chlor substituierten, verzweigten oder unverzweigten, aliphatischen oder aromatischen Kohlenwasserstoffrest mit 1 bis 20 Kohlenstoffatomen,
   - **e**: einen Wert von 1- 10,
   - **f** und **g**: unabhängig voneinander einen Wert von 0 oder 1 und
   - **h**: einen Wert von 1 bis 500 bedeuten.
f) monofunktionellen Kettenterminierungsreagenzien,
g) monofunktionellen Polyethern, Polyestern,
h) monofunktionellen oder difunktionellen ionischen Molekülen entweder in ihrer neutralen Form oder in ihrer Salzform, beispielsweise Aminogruppen, gegebenenfalls mit Säure umgesetzt, Carbonsäure- oder Sulfonsäure-Gruppen gegebenenfalls mit Base umgesetzt.

Falls **b** mindestens 1 ist, kann im zweiten Schritt bis zu 95 Gewichtsprozent, bezogen auf alle eingesetzten Komponenten, an Kettenverlängerern, die ausgewählt werden aus Diaminen, Isocyanat-geblockten Hydroxy-Verbindungen, DihydroxyVerbindungen oder Mischungen davon, eingesetzt werden.

Vorzugsweise weisen die Kettenverlängerer die allgemeine Formel (8)

HZ-D-ZH,

auf, wobei **D** und **Z** die vorstehenden Bedeutungen aufweisen. Falls **Z** die Bedeutung O hat, kann der Kettenverlängerer der allgemeinen Formel (8) auch vor der Umsetzung im zweiten Schritt mit Diisocyanat der allgemeinen Formel (5) umgesetzt werden. Gegebenenfalls kann als Kettenverlängerer auch Wasser eingesetzt werden.

Vorzugsweise sind im Blockcopolymer der allgemeinen Formel (1), bezogen auf die Summe der Urethan- und Harnstoffgruppen, mindestens 25 Mol-%, insbesondere mindestens 50 Mol-% Harnstoffgruppen enthalten.

Beispiele für die zu verwendenden Diisocyanate der allgemeinen Formel (5) sind aliphatische Verbindungen wie Isophorondiisocyanat, Hexamethylen-1,6-diisocyanat, Tetramethylen-1,4-diisocyanat und Methylendicyclohexyl-4,4'diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-mxyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen **Y** ein Alkylenrest ist, da diese zu Materialien führen, die verbesserte UV-Stabilitäten zeigen, welche bei einer Außenanwendung der Polymere von Vorteil ist.

Die Aminoalkyl-terminierten Siliconöle besitzen auf der einen Seite Siloxan-Einheiten aber auch nicht-hydrolysierbare AminoFunktionen. Diese sind vorzugsweise weitgehend frei von Kontaminationen aus mono-, tri- oder höherfunktionellen Siliconölen. Hergestellt werden sie durch bekannte Methoden wie z.B. Äquilibrierungsreaktionen oder Hydrosilylierung von alphaomega H-Siloxanen mit Allylamin, etc.
Die auf diesem Wege hergestellten Komponenten weisen jedoch herstellungsbedingte Verunreinigungen und Charakteristika wie Molgewichtsverteilungen auf, die dazu führen, daß die so hergestellten Aminöle und damit auch die daraus hergestellten Copolymere Farbschwankungen unterliegen, Geruchsbelastung zeigen, evtl. Katalysatorreste besitzen oder auch andere Katalysatoren inhibieren können.
Besonders bevorzugt sind daher Aminosilikone die nach dem in der DE 10051886 C beschriebenen Weg hergestellt wurden, da diese die oben beschriebenen Nachteile nicht zeigen.

Die Hydroxyalkyl-terminierten Siliconöle besitzen auf der einen Seite Siloxan-Einheiten aber auch nicht-hydrolysierbare Hydroxy-Funktionen. Diese sind vorzugsweise weitgehend frei von Kontaminationen aus mono-, tri- oder höherfunktionellen Siliconölen. Dabei können als Verbindungsglied zwischen Si-Atom und der OH-Funktion ebenfalls Polyoxyalkylene, wie Polyethylenoder Polypropylenoxid, oder Polyestergruppen , wie Polycaprolacton, verwendet werden. Entsprechende Produkte werden von der Firma Th. Goldschmidt unter dem Namen Tegomer® H-Si 2111, 2311 und 2711 oder z.B. von der Firma OSi Specialties unter dem Namen Silwet® vertrieben. Dabei beeinflussen die Hydroxyalkylsilicone unter anderem die Schmelzviskositäten und die Erweichungsbereiche der entstehenden Blockcopolymere.

Kettenverlängerer sind difunktionelle, meistens niedermolekulare Verbindungen, vorzugsweise Diamine oder Diole, welche meistens zur Verbesserung der mechanischen Eigenschaften des Polymeren eingesetzt werden. Beispiele hierfür sind 1,4-Butandiol, Diethylenglykol, Aminoethanol, Ethylendiamin, Dytek® A oder Mischungen davon. Im Falle der Diamine kann z.B. auch die Aminogruppe Teil einer cyclischen Verbindung sein.

Die α,ω-OH-terminierten Alkylene der allgemeinen Formel (7) sind bevorzugt Polyalkylene oder Polyoxyalkylene. Hierbei können Polyetherpolyole, Polytetramethylendiole, Polyesterpolyole, Polycaprolactondiole aber auch α,ω-OHterminierte Polyalkylene auf Basis von Polyvinylacetat, Polyvinylacetatethylencopolymere, Polyvinylchloridcopolymer, Polyisobutyldiole, hydrierte Polybutadiendiole, Polybutadiendiole, Polycarbonatdiole und deren z.B. fluorierte Derivate eingesetzt werden. Bevorzugt werden dabei Polyoxyalkyle verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mn bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA.

Als Kettenterminierungsreagenzien zur Erzeugung von **Q** können z.B. Monoisocyanate, Alkohole wie. z.B. Ethanol, Propanol, mono-Hydroxy-funktionalisierte Polyether, Polyester oder Polycarbonate oder Amine wie z.B. Dibutylamin, Butylamin oder mono-Amino-funktionalisierte Polyether, Polyester oder Polycarbonate verwendet werden. Diese führen zu chemisch inerten Kettenenden und verhindern so einen zu starken Molekulargewichtsaufbau während der Polymerisation und verhindern damit ein zu starkes Ansteigen der Viskosität der Reaktionslösung. Gleichzeitig kann durch die Verwendung von Polyether-Segmenten, wie z.B. Polyethylenoxid-Segmenten, am Kettenende die Dispergierbarkeit der Polymere in Wasser beeinflußt werden. Ebenfalls können Aminofunktionelle Alkoxysilane wie z.B. A1100 der Firma Crompton oder N-(2-aminoethyl)-3-aminopropyltrimethoxysilan 3-Aminopropyltriethoxysilan verwendet werden. Die Verwendung Isocyanat-funktionalisierter Alkoxysilane wie Isocyanatopropyltriethoxysilan ist ebenfalls möglich. Die Verwendung dieser Silane führt zur kovalenten Anbindung von Alkoxysilylgruppen, welche entweder haftvermittelnde Eigenschaften dem Polymer verleihen können, aber auch zur nachträglichen Vernetzung des Polymeren z.B. in Dispersion führen können und damit die mechanischen Eigenschaften des Polymeren verändern. Die Vernetzung kann dabei nach dem Stand der Technik katalysiert werden.

Gruppen mit stark hydrophilen oder ionischen Gruppen führen zu einer erhöhten Wasserlöslichkeit bzw. zu einer Verbesserung der Dispergierbarkeit des Polymeren in Wasser. Gleichzeitig wird dabei die Stabilität der Dispersion in Wasser verbessert. Im beschichteten Gewebe erhöhen solche Gruppen die Durchlässigkeit von Wasserdampf durch das so beschichtete Gewebe. Für gewöhnlich werden hierfür ionische Verbindungen gewählt wie z.B. Carboxylate, Sulfate, Sulfonate, Phosphate oder Ammoniumverbindungen, welche kovalent am Polymer angebunden sind. Die entsprechenden Gegenionen sind z.B. Metallionen oder Halogenidionen. Ein Beispiel für eine stark hydrophile Gruppe ist z.B. Dimethylolpropionsäure, welche in der Form der Carbonsäure in ein Prepolymer eingebunden wird und erst in einer zweiten Stufe z.B. während der Kettenverlängerung der Prepolymere mit den sog. Kettenverlängerern mit einer Base (z.B. Triethylamin) in das Carboxylatsalz umgesetzt wird.

Die bei der Herstellung der Blockcopolymere der allgemeinen Formel (1) verwendeten Lösungsmittel sollten inert gegenüber Isocyanat-Gruppen sein. Für gewöhnlich werden z.B. Toluol, Aceton, Methylethylketon, DMF, THF, NMP oder Dimethylacetamid bzw. deren Mischungen verwendet. Es kann jedoch auch z.B. Isopropanol verwendet werden, wenn man Diamine mit Isocyanaten umsetzt, da diese eine deutlich erhöhte Reaktivität zeigen. Für gewöhnlich werden Lösungsmittel eingesetzt, um stark erhöhte Viskositäten während der Reaktion zu vermeiden. Gleichzeitig gelingt es bei der Verwendung von geeigneten Lösungsmitteln (z.B. Aceton, Methylethylketon, THF), die Polymerlösung in Wasser zu dispergieren und anschließend das org. LM wieder aus der Polymerdispersion zu entfernen. Einige Lösungsmittel unterstützen darüber hinaus die Filmbildung bei Dispersionen, wie z.B. NMP.

Die Umsetzung erfolgt vorzugsweise, wie bei der Herstellung von Polyurethanen üblich, durch Zugabe eines Katalysators. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin. Bei der ausschließlichen Verwendung von Aminkomponenten und Diisocyanaten kann auch auf die Verwendung spezieller Katalysatoren verzichtet werden.

Die Herstellung der oben beschriebenen Copolymere der allgemeinen Formel (1) kann in Lösung als auch in Festsubstanz, kontinuierlich oder diskontinuierlich erfolgen. Wesentlich dabei ist, dass für die gewählte Polymermischung unter den Reaktionsbedingungen eine optimale und homogene Durchmischung der Bestandteile erfolgt und eine Phasenunverträglichkeit zwischen den Reaktionskomponenten gegebenenfalls durch Lösungsvermittler verhindert wird. Die Herstellung hängt dabei vom verwendeten Lösungsmittel ab. Ist der Anteil der Hartsegmente wie Urethan- oder Harnstoffeinheiten groß, so muss gegebenenfalls ein Lösungsmittel mit einem hohen Löslichkeitsparameter wie beispielsweise Dimethylacetamid gewählt werden. Für die meisten Synthesen haben sich THF, Aceton, MEK, Isopropanol sowie Toluol als ausreichend gut geeignet erwiesen.
Vorzugsweise werden alle Bestandteile in einem inerten Lösungsmittel gelöst. Ebenfalls bevorzugt ist eine Synthese ohne Lösungsmittel.

Eine besonders bevorzugten Form dieser Erfindung sind wasserdispergierbare Systeme der allgemeinen Formel I, d.h. Systeme, die ionische Gruppen enthalten also selbstdispergierend sind. Diese haben den Vorteil einer Verarbeitung im flüssigen Zustand, ohne daß jedoch bei der Verarbeitung flüchtige Lösungsmittel in verstärktem Maße freigesetzt werden können.

Eine weitere bevorzugte Ausführungsform ist die Synthese reiner Siloxan-Harnstoffcopolymere (A bedeutet eine Aminogruppe -NR'und Z ebenfalls eine Aminogruppe -NR'-), da hier die Reaktion zwischen den Amin- und den Isocyanat-Gruppen ohne Katalysator abläuft, d.h. man auf z.B. Zinn-Katalysatoren, die zur Bildung von Urethan-Gruppen gewöhnlich benötigt werden, verzichten kann. Weiterhin zeichnen sich diese Materialien im Gegensatz zu den Siloxan-Harnstoff-Urethan-Copolymeren durch eine bessere Mechanik, teilweise erhöhte Transparenz und vor allem höhere Erweichungsbereiche aus, was z.B. beim Bügeln dieser Materialien von Vorteil sein kann.

Für die Reaktion ohne Lösungsmittel ist die Homogenisierung der Mischung von entscheidender Bedeutung bei der Umsetzung. Ferner kann die Polymerisation auch durch die Wahl der Reaktionsfolge bei einer Stufensynthese gesteuert werden.

Die erfindungsgemäßen textilen Gebilde umfassen neben dem Blockcopolymer (A) Fasern, welche beispielsweise als Fäden und als textilen Flächengebilde wie Gewebe, Gewirke, Gelege, Gestricke, Vliese, Filze verwendet werden können.

Die textilen Flächengebilde können gefertigt sein aus Mineralfasern, wie Glasfasern oder Silikatfasern, Naturfasern wie z.B. Wolle, Seide oder Baumwolle, Kunstfasern wie z.B. Polyesterfasern, Polyamidfasern oder Mischpolymerfasern, oder Metallfasern. Filamentfasern oder Stapelfasern aus den genannten Substraten können eingesetzt werden. Flächengebilde aus Fasermischungen wie z.B. Baumwolle - Polyester sowie natürliche Flächengebilde wie Leder können verwendet werden.

Das Blockcopolymer (A) kann als Beschichtungsmaterial oder Ausrüstungsmaterial für Fasern und textile Flächengebilde verwendet werden.
Die Beschichtung oder Ausrüstung kann im Rakel-, Tauch(Quetsch)(Dip)verfahren, Extrusionsverfahren, Spritz ,-Beflockung- oder Sprühverfahren, Foulard, Auszieh oder Tauch-Schleuder Verfahren, Tamponierverfahren, Drückverfahren aufgebracht werden. Auch alle Arten von Rollenbeschichtungen, wie Gravurwalzen, Pflatschen oder Auftrag über Mehrwalzensysteme sowie Druck z.B. (Rotary)Siebdruck sind möglich. Schaumauftrag und nachträgliches kalandrieren ist mit diesem Material möglich. Auftrag mit Kalander oder Schmelzkalander kann durchgeführt werden.
Blockcopolymer (A) ist geeignet zum bedrucken, kaschieren, laminieren, bondieren.
Blockcopolymer (A) kann auch im Transferbeschichtungsverfahren aufgebracht werden. Die Verwendung als Laminiermaterial, Kleber und Hotmelt ist möglich.
Weiterhin eignet sich Blockcopolymer (A) zur Abdichtung von Nähten.

Die textilen Gebilde können überall eingesetzt werden, wo besonders hohe Anforderungen gestellt werden. Beispiele sind Gleitschirme, Fallschirme, Heißluftballons, Freizeitkleidung, Freizeitartikel wie Zelte oder Rucksäcke, Segel oder Airbags. Im technischen Bereich werden die textilen Gebilde vorteilhaft für Förderbänder, Kompensatoren, Markisen, textiles Bauen, oder im Isolationsbereich eingesetzt.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt. Die Molekularmassen wurden mittels GPC in Toluol (0,5 ml/min) bei 23 °C bestimmt(Säule: PLgel Mixed C + PLgel 100 A, Detektor: RI ERC7515)
PDMS bedeutet Polydimethylsiloxan
TPE bedeutet Blockcopolymer (A)

### Beispiel 1

In einem 250 ml-Kolben mit Tropftrichter und Rückflußkühler wurden 40g Bisaminopropyl-PDMS (Mol-Gewicht 3200) in einem Lösungsmittelgemisch aus 80ml trockenem THF und 20ml Dimethylacetamid vorgelegt. Anschließend wurde bei Raumtemperatur eine Lösung von 2,33 g Methylendi-pphenyldiisocyanat in 20ml trockenem THF zugetropft und danach 1 Stunde unter Rückfluß gekocht. Nach dem Abkühlen der Lösung wurde das Polymer durch Eintropfen in Hexan ausgefällt. Man erhielt ein klares Copolymer mit einem Molekulargewicht von Mw 161000 g/mol, welches in der TMA einen Erweichungsbereich bei 154 °C zeigte.

### Beispiele 2-10:

Analog zu Beispiel 1 wurde ein Bisaminopropyl-PDMS mit einem Molekulargewicht von 3200 g/mol oder 11000 g/mol mit anderen Diisocyanaten umgesetzt. Die Ergebnisse sind in Tabelle I aufgeführt:

| Beispiel | Aminöl | Diisocyanat | Ausbeute | Molekulargewicht (Mw) [g/mol] | Erweichung |
|---|---|---|---|---|---|
| 2 | 3200 g/mol | IPDI | 95 % | 88.000 | 65 °C |
| 3 | 3200 g/mol | HMDI | 92 % | 95.000 | 63 °C |
| 4 | 3200 g/mol | TDI | 88 % | 114.000 | 131 °C |
| 5 | 3200 g/mol | TMXDI | 96 % | 110.000 | 171 °C |
| 6 | 3200 g/mol | H12MDI | 94 % | 97.000 | 126 °C |
| 7 | 11000 g/mol | MDI | 89 % | 154.000 | Nicht Bestimmt. |
| 8 | 11000 g/mol | IPDI | 87 % | 167.000 | Nicht Bestimmt |
| 9 | 11000 g/mol | TDI | 93 % | 198.000 | Nicht Bestimmt |
| 10 | 11000 g/mol | H12MDI | 91 % | 212.000 | 120 °C |

### Beispiel 11:

In einem Zweiwellenkneter der Firma Collin, Ebersberg mit 4 Heizzonen wurde unter Stickstoffatmosphäre in der ersten Heizzone das Diisocyanat und in der zweiten Heizzone das Aminopropylterminierte Siliconöl dosiert. Das Temperaturprofil der Heizzonen war wie folgt programmiert: Zone 1 30°C, Zone 2 100°C, Zone 3 150°C, Zone 4 140°C. Die Drehzahl betrug 50 u/min. Das Diisocyanat (Methylen-bis-(4-Isocyanatocyclohexan)) wurde in Zone 1 mit 304mg/min dosiert und das Aminöl (3200 g/mol) wurde in Zone 2 mit 3,5g/min dosiert. An der Düse des Extruders konnte ein klares Polydimethylsiloxan-Polyharnstoff-Blockcopolymer mit einem Molekulargewicht von 110.000 g/mol und einer Erweichungstemperatur von 126°C abgenommen werden.

### Beispiel 12:

Analog zu Beispiel 11 wurden in einem Zweiwellenkneter der Firma Collin, Ebersberg (Teach-Line) mit 4 Heizzonen unter Stickstoffatmosphäre bei folgendem Temperaturprofil (Zone 1 30°C, Zone 2 90°C, Zone 3 120°C, Zone 4 130°C, Drehzahl = 50 u/min) das Diisocyanat (Isophorondiisocyanat) in Zone 1 mit 252 mg/min und das Aminöl (3200 g/mol) in Zone 2 mit 3,5g/min dosiert. An der Düse des Extruders konnte ein klares Polydimethylsiloxan-Polyharnstoff-Blockcopolymer mit einer Erweichungstemperatur von 58°C abgenommen werden. Es hatte ein Molekulargewicht von 52.000 g/mol.

### Beispiel 13

Analog zu Beispiel 11 wurden in einem Zweiwellenkneter der Firma Collin, Ebersberg (Teach-Line) mit 4 Heizzonen unter Stickstoffatmosphäre bei folgendem Temperaturprofil (Zone 1 30°C, Zone 2 100°C, Zone 3 170°C, Zone 4 180°C, Drehzahl = 50 u/min) das Diisocyanat (Toluol 2,4-diisocyanat) in Zone 1 mit 111 mg/min und das Aminöl (11.000 g/mol) in Zone 2 mit 5,2 g/min dosiert. An der Düse des Extruders konnte ein Polydimethylsiloxan-Polyharnstoff-Blockcopolymer mit einer Erweichungstemperatur von 87°C abgenommen werden. Es hatte ein Molekulargewicht von 195.000 g/mol.

### Beispiel 14

Analog zu Beispiel 11 wurden in einem Zweiwellenkneter der Firma Collin, Ebersberg (Teach-Line) mit 4 Heizzonen unter Stickstoffatmosphäre bei folgendem Temperaturprofil (Zone 1 30°C, Zone 2 80°C, Zone 3 140°C, Zone 4 120°C, Drehzahl = 50 u/min) ein Isocyanat-terminiertes Prepolymer (hergestellt durch 5-stündiges Erhitzen bei 50 °C aus 0,2 mol Tegomer® H-Si 2711 (Hydroxyhexyl-terminiertes PDMS) und 1,3 mol Isophorondiisocyanat in Gegenwart von Dibutylzinndilaurat) in Zone 1 mit 6,4 g/min und das Aminöl (3.450 g/mol) in Zone 2 mit 19,0 g/min dosiert. An der Düse des Extruders konnte ein Polydimethylsiloxan-Polyharnstoff-Polyurethan-Blockcopolymer mit einer Erweichungstemperatur von 35°C abgenommen werden. Es hatte ein Molekulargewicht von 86.000 g/mol.

### Beispiel 15

In einem 250 ml-Kolben mit Tropftrichter und Rückflußkühler wurden 32g Bisaminopropyl-PDMS (Mol-Gewicht 3200)und 5 g Bishydroxypropyl-PDMS (Tegomer® 2711, Th. Goldschmidt AG, Mol-Gewicht 5200) in einem Lösungsmittelgemisch aus 80ml trockenem THF und 20ml Dimethylacetamid vorgelegt. Nach Zugabe von 3 Tropfen Dibutylzinndilaurat wurde bei Raumtemperatur eine Lösung von 2,5 g Isophorondiisocyanat in 20ml trockenem THF zugetropft und danach 2 Stunden unter Rückfluß gekocht. Nach dem Abkühlen der Lösung wurde das Polymer durch Eintropfen in Hexan ausgefällt.
Man erhielt ein Copolymer mit einem Molekulargewicht von Mw 78000 g/mol, welches einen Erweichungspunkt bei 42 °C hat.

### Beispiel 16

In einem 250 ml-Kolben mit Tropftrichter und Rückflußkühler wurden 32g Bisaminopropyl-PDMS (Mol-Gewicht 3200)und 0,9 g Butandiol in einem Lösungsmittelgemisch aus 80ml trockenem THF und 20ml Dimethylacetamid vorgelegt. Nach Zugabe von 3 Tropfen Dibutylzinndilaurat wurde bei Raumtemperatur eine Lösung von 4,5 g Isophorondiisocyanat in 20ml trockenem THF zugetropft und danach 2 Stunde unter Rückfluß gekocht. Nach dem Abkühlen der Lösung wurde das Polymer durch Eintropfen in Hexan ausgefällt.

Man erhielt ein Copolymer mit einem Molekulargewicht von Mw 63000 g/mol.

### Beispiel 17

In einem 250 ml-Kolben mit Tropftrichter und Rückflußkühler wurden 32g Bisaminopropyl-PDMS (Mol-Gewicht 3200)und 1,2 g Hexamethylendiamin in einem Lösungsmittelgemisch aus 80ml trockenem THF und 20ml Dimethylacetamid vorgelegt. Nach Zugabe einer Lösung von 4,5 g Isophorondiisocyanat in 20ml trockenem THF wurde 2 Stunde unter Rückfluß gekocht. Nach dem Abkühlen der Lösung wurde das Polymer durch Eintropfen in Hexan ausgefällt.
Man erhielt ein Copolymer mit einem Molekulargewicht von Mw 73000 g/mol.

### Beispiel 18

In einem 2000 ml-Kolben mit Tropftrichter und Rückflußkühler wurde eine Lösung von 136g Bisaminopropyl-PDMS (Mol-Gewicht 3450) in 250 ml Methylethylketon (MEK) zu einer Lösung von 44.4 g Isophorondiisocyanat in 350 ml MEK zugetropft und 30 min bei Raumtemperatur gerührt. Anschließend wurde 3 Tropfen Dibutylzinndilaurat und eine Lösung von 21.5 g Dimethylolpropionsäure und 18.2 g Triethylamin in 70 ml MEK zugegeben und 5 Stunden unter Rückfluß gekocht. Anschließend wurde die viskose Lösung unter starkem Rühren in 1500 ml Wasser dispergiert und das MEK und etwas Wasser am Rotationsverdampfer unter Vakuum entfernt. Man erhielt eine PDMS-Polyharnstoff-Polyurethan-Dispersion in Wasser mit einem Festgehalt von 42 %, welche noch nach 3 Monaten stabil war.

### Beispiel 19

In einem 2000 ml-Kolben mit Tropftrichter und Rückflußkühler wurden eine Lösung von 136g Bisaminopropyl-PDMS (Mol-Gewicht 3450) in 100 ml Methylethylketon (MEK) zu einer Lösung von 52.4 g Methylen-bis-(4-Isocyanatocyclohexan) in 200 ml MEK zugetropft und 30 min bei Raumtemperatur gerührt. Anschließend wurde 3 Tropfen Dibutylzinndilaurat und eine Lösung von 21.5 g Dimethylolpropionsäure und 18.2 g Triethylamin in 70 ml MEK zugegeben und 5 Stunde unter Rückfluß gekocht. Anschließend wurde die viskose Lösung unter starkem Rühren in 1500 ml Wasser dispergiert und das MEK und etwas Wasser am Rotationsverdampfer unter Vakuum entfernt. Man erhielt eine PDMS-Polyharnstoff-Polyurethan-Dispersion in Wasser mit einem Festgehalt von 33 %, welche noch nach 3 Monaten stabil war.

### Beispiel 20

In einem 2000 ml-Kolben mit Tropftrichter und Rückflußkühler wurden eine Lösung von 180g Bisaminopropyl-PDMS (Mol-Gewicht 3450) in 100 ml Methylethylketon (MEK) zu einer Lösung von 66,6 g Isophorondiisocyanat in 200 ml MEK zugetropft und 30 min bei Raumtemperatur gerührt. Anschließend wurde 3 Tropfen Dibutylzinndilaurat und eine Lösung von 26.8 g Dimethylolpropionsäure und 20,2 g Triethylamin in 70 ml MEK zugegeben und 5 Stunde unter Rückfluß gekocht. Anschließend wurde die viskose Lösung unter starkem Rühren in 1500 ml Wasser, welches noch 3,3 g Ethylendiamin enthielt, dispergiert. MEK und etwas Wasser wurden am Rotationsverdampfer unter Vakuum entfernt. Man erhielt eine PDMS-Polyharnstoff-Polyurethan-Dispersion in Wasser mit einem Festgehalt von 25 %, welche noch nach 3 Monaten stabil war.

### Beispiel 21

In einem 2000 ml-Kolben mit Tropftrichter und Rückflußkühler wurden eine Lösung von 180g Bisaminopropyl-PDMS (Mol-Gewicht 3450) in 100 ml Methylethylketon (MEK) zu einer Lösung von 66,6 g Isophorondiisocyanat in 200 ml MEK zugetropft und 30 min bei Raumtemperatur gerührt. Anschließend wurde 3 Tropfen Dibutylzinndilaurat und eine Lösung von 26.8 g Dimethylolpropionsäure und 20,2 g Triethylamin in 70 ml MEK zugegeben und 5 Stunde unter Rückfluß gekocht. Danach wurden 23,6 g Aminopropyltriethoxysilan zugegeben und anschließend wurde die viskose Lösung unter starkem Rühren in 1500 ml Wasser dispergiert. MEK und etwas Wasser wurden am Rotationsverdampfer unter Vakuum entfernt. Man erhielt eine PDMS-Polyharnstoff-Polyurethan-Dispersion in Wasser mit einem Festgehalt von 21 %, welche noch nach 3 Monaten stabil war.

### Anwendungsbeispiel 1

Ein Gewebe aus Polyamid 6.6 mit einem Flächengewicht von 65 g/m² wurde mit einer Lösung des TPEs aus Beispiel 11 in einer Mischung aus 1 Teil Isopropanol und 1 Teil Toluol mit einem Rakel beschichtet.
In einem Ofen wurde bei 120 °C das Lösemittel abgedampft.
Es wurde ein Beschichtungsgewicht von 10 g/m² erzielt.

Es wurde eine gleichmäßige Beschichtung mit geschlossenem transparentem Film und glänzender Oberfläche erhalten.
Die Wasserdichtheit betrug >100 mbar
Wasser perlte in Tropfenform ab.
Die Beschichtung war weich und erzeugte einen angenehm weichen Griff.
Mit einer heißen Presse war das beschichtete Textil bei 180 °C und unter Druck verschweißbar.
Nach 5 Wäschen in einer üblichen Waschmaschine bei 40 °C war die Beschichtung unbeschadet.
Die Beschichtung war gut schmutzabweisend. Kaffeetropfen erzeugten keinen braunen Rückstand und konnten mit einem feuchten Lappen gut abgereinigt werden.
Auch Kugelschreibertinte konnte einfach mit einem feuchten Lappen abgereinigt werden.

### Anwendungsbeispiel 2

Das TPE aus Beispiel 18 wurde aus wässeriger Lösung mit einem Rakel auf ein Polyestergewebe mit einem Flächengewicht von 80 g/m² beschichtet.
Bei 150 °C wurde das Wasser abgedampft. Es wurde ein Beschichtungsgewicht von 10 g/m² erzielt.

Das beschichtete Gewebe zeichnete sich durch folgendes Eigenschaftsprofil aus:

Ein Wassertropfen zerfloss auf der Oberfläche - (Oberfläche war hydrophil), jedoch drang kein Wasser durch.

Wasserdichtheit bis 30 mbar.

Das beschichtete Gewebe wies eine Wasserdampfdurchlässigkeit von 1354 g/m² *d (nach Lyssy) auf.
Das unbeschichtete Gewebe zum Vergleich hatte 1800 g/m² *d.
Ein Vergleich mit einer üblichen Beschichtung aus Siliconkautschuk wies eine Wasserdampfdurchlässigkeit von 700 g/m² * Tag auf bei einer Wasserdichtheit von 35 mbar.
Ein Vergleich mit einer übliche Beschichtung aus Polyurethan zeigte eine Wasserdampfdurchlässigkeit von 800 g/m² * d und einer Wasserdichtheit von <10 mbar.

### Anwendungsbeispiel 3

CO-Maschenware Interlock (16 R / 14 S) 100 % Baumwolle 250 g/m² wurde am Foulard bei einem Abquetschdruck von 3 bar mit einer 0,5 %igen isopropanolischen Lösung der TPEs aus Beispiel 11 und 12 ausgerüstet. Die Flottenaufnahme betrug 70 %.

Anschließend wurden die Stoffproben zunächst auf einem Laborspannrahmen 3 min bei 150 °C getrocknet.
Nach 48 h Verweilen im Normklima wurden die Griffe der Muster von 5 Personen im Vergleich zu einem mit einer Silikonaminölemulsion (Wacker® Finish CT 34 E) bei identischer Silikonauftragsmenge ausgerüsteten Referenzmuster bewertet.
Die Griffunterschiede wurden von allen Personen als deutlich bewertet. Folgendes Ranking (beginnend mit dem angenehmsten Griff) wurde übereinstimmend von allen Prüfern festgestellt:
TPE aus Beispiel 11, TPE aus Beispiel 12, Referenzmuster Wacker® Finish CT 34 E, Blindwert (nicht ausgerüstet).

### Anwendungsbeispiel 4

CO-Webware Popeline 110 g/m² (60 Kettfäden/cm 36 Schußfäden/cm) 100 % Baumwolle wurde am Foulard bei einem Abquetschdruck von 3 bar mit einer 0,5 %igen isopropanolischen Lösung der TPEs aus Beispiel 11 und 12 ausgerüstet. Die Flottenaufnahme betrug 70 %.
Die Stoffproben wurden zunächst an der Luft getrocknet.

Anschließend erfolgte eine Knitterfreiausrüstung mit einem marktüblichen Vernetzerharz auf Basis eines DMDHEU Harzes (Arcofix) und der Griff der Muster sowie die Knittererholungswinkel wurden nach 48 h Verweilen im Normklima bestimmt.
Die Meßergebnisse sind in Tabelle II aufgeführt:

| Nr. | TPE-Ausrüstung Klotzen mit 0,5 %iger Lösung in i-Propanol. Lufttrocknen | 40 g/l DMDHEU 10 g/l MgCl2 1 g/l NaBF4 | 0,5 g/l Essigsäure | Griff hoher Wert = gut | Knitterwinkel Poplin Kette | | Knitterwinkel Poplin Schuß | |
|---|---|---|---|---|---|---|---|---|
| | | | | | 1 min | 30 min | 1 min | 30 min |
| 1 | | x | x | 0 | 44 | 56 | 46 | 56 |
| 2 | | | x | 1 | 33 | 46 | 35 | 44 |
| 6 | Beispiel 11 | | x | 4 | 52 | 63 | 47 | 58 |
| 7 | Beispiel 11 | x | x | 4 | 74 | 90 | 85 | 99 |
| 6 | Beispiel 12 | | x | 3 | 45 | 58 | 51 | 61 |
| 7 | Beispiel 12 | x | x | 2 | 75 | 85 | 79 | 94 |

Die mit den TPEs ausgerüsteten Stoffmuster zeigen einen herausragenden Synergismus zum Effekt des Vernetzerharzes. Gleichzeitig wird die griffverschlechternde Wirkung der Harzausrüstung aufgehoben.

### Anwendungsbeispiel 5

Füllfasern aus Trevira® PES Stapelfasern 6,7 dtex wurden im Tauchverfahren mit den TPEs aus Beispiel 11 und 12 ausgerüstet.
Die Ausrüstung erfolgte aus Lösung in Isopropanol mit einer Produktauflage von 0,3 Gew % auf der Faser.
Nach Trocknen 5 min 150 °C und 5 min 180 °C erfolgte die Beurteilung des Griffes.
Weiterhin wurden je 15 g der Fasern in ein Becherglas gefüllt und mit einer Plastikscheibe abgedeckt und 1 h mit einem Gewicht von 1 kg belastet. Die Höhe der Plastikscheibe wurde vor Entfernen des Gewichtes (Kompressionswert) und 30 min nach Entfernen des Gewichtes (Rücksprung) abgelesen. Die Ergebnisse sind in Tabelle III aufgeführt:

| Produkt | Kompressionswert | Rücksprung | Griff |
|---|---|---|---|
| Blindwert | 7 cm | 9 cm | schlecht |
| TPE-Beispiel 11 | 5,2 cm | 10 cm | sehr gut |
| TPE-Beispiel 12 | 5,5 cm | 10 cm | gut |

## Patentansprüche

1. textile Gebilde, die Fasern und Organopolysiloxan/Polyharnstoff/Polyurethan-Blockcopolymer (A) der allgemeinen Formel (1) 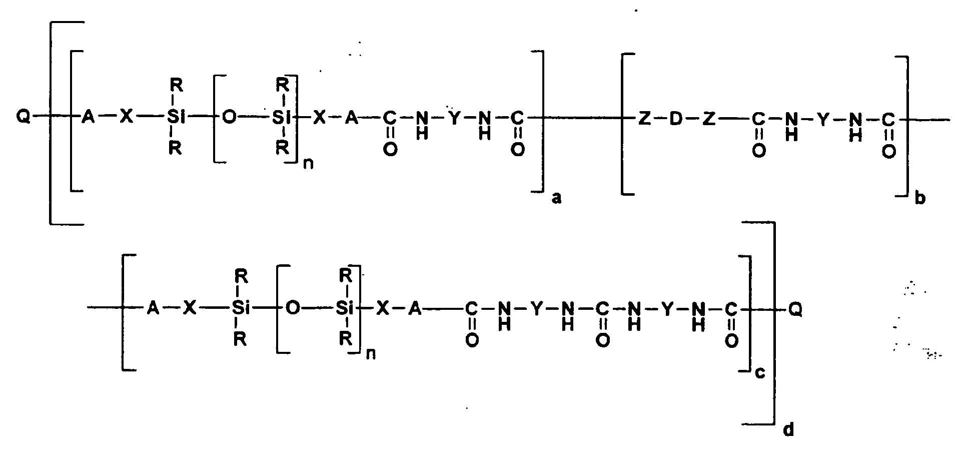 als Beschichtungsmaterial oder Ausrüstungsmaterial für die Fasern umfassen, wobei
**R** einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können,
**A** ein Sauerstoffatom oder eine Aminogruppe -NR'-,
**Z** ein Sauerstoffatom oder eine Aminogruppe -NR'-,
**R**' Wasserstoff oder einen Alkylrest mit 1 bis 10 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen Alkylenrest mit 1 bis 1500 Kohlenstoffatomen, in dem einander nicht benachbarte Methyleneinheiten durch Gruppen -O-, -COO-, -OCO-, oder -OCOO-, ersetzt sein können, der durch Fluor, Chlor, C₁-C₆-Alkyl oder C₁-C₆-Alkylester, der durch Aminogruppen, gegebenenfalls mit Säure umgesetzt, oder durch Carbonsäure- oder Sulfonsäure-Gruppen gegebenenfalls mit Base umgesetzt, substituiert sein kann,
**Q** eine reaktive oder nicht reaktive Endgruppe, welche kovalent an das Polymer gebunden ist,
**n** eine Zahl von 1 bis 4000,
**a** eine Zahl von mindestens 1,
**b** eine Zahl von 0 bis 40,
**c** eine Zahl von 0 bis 30 und
**d** eine Zahl größer 0 bedeuten.

2. Textile Gebilde nach Anspruch 1, bei denen **R** einen einwertigen Kohlenwasserstoffrest mit 1 bis 6 Kohlenstoffatomen bedeutet.

3. Textile Gebilde nach Anspruch 1 oder 2, bei denen **X** einen Alkylen-Rest mit 1 bis 10 Kohlenstoffatomen bedeutet.

4. Textile Gebilde nach Anspruch 1 bis 3, bei denen **a** eine Zahl von höchstens 50 bedeutet.

5. Textile Gebilde nach Anspruch 1 bis 4, bei denen **n** eine Zahl von 3 bis 400 bedeutet.

6. Verwendung des Blockcopolymeren (A) gemäß Anspruch 1 bis 5 als Beschichtungsmaterial oder Ausrüstungsmaterial für Fasern, Fäden und textile Flächengebilde.

## Claims

1. Textile structures comprising fibers and an organopolysiloxane-polyurea-polyurethane block copolymer (A) of the general formula (1) 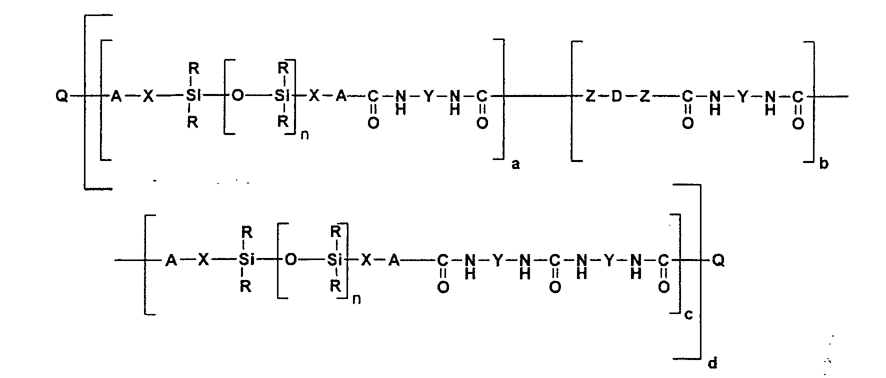 as a coating material or finishing material for the fibers, where
**R** is monovalent hydrocarbyl of 1 to 20 carbon atoms optionally substituted by fluorine or chlorine,
**X** is alkylene of 1 to 20 carbon atoms in which mutually nonadjacent methylene units may be replaced by -O- moieties,
**A** is an oxygen atom or an amino group -NR'-,
**Z** is an oxygen atom or an amino group -NR'-,
**R'** is hydrogen or alkyl of 1 to 10 carbon atoms,
**Y** is divalent hydrocarbyl of 1 to 20 carbon atoms optionally substituted by fluorine or chlorine,
**D** is alkylene of 1 to 1 500 carbon atoms in which mutually nonadjacent methylene units may be replaced by -O-, -COO-, -OCO- or -OCOO- moieties and which may be substituted by fluorine, chlorine, C₁-C₆-alkyl or optionally substituted C₁-C₆-alkyl ester, the optional substituents being selected from the group consisting of amino groups, optionally reacted with an acid, and carboxylic acid or sulfonic acid groups, optionally reacted with a base,
**Q** is a reactive or nonreactive end group which is covalently attached to the polymer,
**n** is from 1 to 4 000,
**a** is at least 1,
**b** is from 0 to 40,
**c** is from 0 to 30, and
**d** is greater than 0.

2. Textile structures according to Claim 1, wherein **R** is monovalent hydrocarbyl of 1 to 6 carbon atoms.

3. Textile structures according to Claim 1 or 2, wherein **X** is alkylene of 1 to 10 carbon atoms.

4. Textile structures according to any of Claims 1 to 3, wherein **a** is not more then 50.

5. Textile structures according to any of Claims 1 to 4, wherein **n** is from 3 to 400.

6. Use of the block copolymer (A) according to Claims 1 to 5 as a coating material or finishing material for fiber, yarn and textile fabric.

## Revendications

1. Structures textiles qui comprennent des fibres et un copolymère à blocs d'organopolysiloxane/polyurée/polyuréthane (A) de formule générale (1) 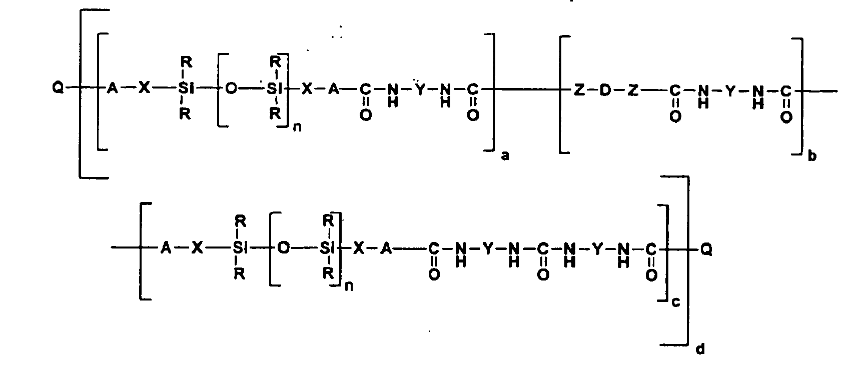 comme matériau de revêtement ou matériau d'apprêt pour les fibres, où
R signifie un radical hydrocarboné monovalent, le échéant substitué par fluor ou chlore comprenant 1 à 20 atomes de carbone,
X signifie un radical alkylène comprenant 1 à 20 atomes de carbone, dans lequel des unités méthylène non adjacentes peuvent être remplacées par des groupes -O-,
A signifie un atome d'oxygène ou un groupe amino - NR'-,
Z signifie un atome d'oxygène ou un groupe amino - NR'-,
R' signifie un atome d'hydrogène ou un radical alkyle comprenant 1 à 10 atomes de carbone,
Y signifie un radical hydrocarboné divalent, le cas échéant substitué par fluor ou chlore comprenant 1 à 20 atomes de carbone,
D signifie un radical alkylène comprenant 1 à 1500 atomes de carbone, dans lequel des unités méthylène non adjacentes peuvent être remplacées par des groupes -O-, -COO-, -OCO-, ou -OCOO-, qui peut être substitué par fluor, chlore, C₁-C₆-alkyle ou ester d'alkyle en C₁-C₆, qui peut être substitué par des groupes amino, le cas échéant transformé avec de l'acide, ou par des groupes acide carboxylique ou acide sulfonique, le cas échéant transformé avec une base,
Q signifie un groupe terminal réactif ou non réactif qui est lié par covalence au polymère,
n signifie un nombre de 1 à 4000,
a signifie un nombre d'au moins 1,
b signifie un nombre de 0 à 40,
c signifie un nombre de 0 à 30 et
d signifie un nombre supérieur à 0.

2. Structure textile selon la revendication 1, où R signifie un radical hydrocarboné monovalent comprenant 1 à 6 atomes de carbone.

3. Structure textile selon la revendication 1 ou 2, où X signifie un radical alkylène comprenant 1 à 10 atomes de carbone.

4. Structure textile selon la revendication 1 à 3, où a signifie un nombre d'au maximum 50.

5. Structure textile selon la revendication 1 à 4, où n signifie un nombre de 3 à 400.

6. Utilisation du copolymère à blocs (A) selon la revendication 1 à 5 comme matériau de revêtement ou matériau d'apprêt pour des fibres, des fils et des structures textiles planes.
